# EUROPEAN PATENT APPLICATION

(11) **EP 2 757 717 A2**
(43) Date of publication of application: **23.07.2014**
(21) Application number: 14151660.9
(22) Date of filing: 17.01.2014
(51) Int. Cl.: H04J 14/02

(54) **Optical transceiver for performing data communication and optical link monitoring, and optical network system**

(30) Priority: 18.01.2013 KR 20130006025; 31.12.2013 KR 20130169111
(71) Applicant: Electronics and Telecommunications Research Institute, Daejeon 305-700 (KR); Korea Electronics Technology Institute, Gyeonggi-do 463-816 (KR)
(72) Inventor: Myong, Seung Il, 305-727 Daejeon (KR); Lee, Jyung Chan, 305-340 Daejeon (KR); Lee, Won Kyoung, 305-755 Daejeon (KR); Lee, Sang Soo, 301-130 Daejeon (KR); Lee, Jun Ho, 157-280 Seoul (KR)
(74) Representative: Guéné, Patrick

(57) **Abstract**

An optical transceiver and an optical network system for performing a data communication and monitoring an optical link are disclosed. The optical transceiver may simultaneously perform the data communication and monitor the optical link, and a wavelength of an optical signal for the data communication and a wavelength of an optical signal for monitoring the optical link may be differently set.

## Description

### CROSS-REFERENCE TO RELATED APPLICATIONS

This application claims the priority benefit of Korean Patent Application No. 10-2013-0006025, filed on January 18, 2013, and Korean Patent Application No. 10-2013-0169111, filed on December 31, 2013, in the Korean Intellectual Property Office, the disclosures of which are incorporated herein by reference.

### BACKGROUND

### 1. Field of the Invention

The present invention relates to an optical transceiver and an optical network system that may determine a fault, a cut, and the like, occurring in an optical link by applying a monitoring light to the optical link.

### 2. Description of the Related Art

To transmit a large amount of content to be used in a service such as an ultra high definition television (UHDTV) and a three-dimensional (3D) TV, an optical network providing a bandwidth of a giga level or more is required. Accordingly, cost of an optical network is on increase according to an increase in a price of a terminal provided to a subscriber.

Meanwhile, an optical network provider may increase a number of subscribers for each central office by expanding a distance between a corresponding central office and a subscriber. Accordingly, it is possible to decrease management cost used for maintaining and repairing the entire network. However, an increase in a distance between a central office and a subscriber and a number of subscribers may increase a number of optical links and may also cause a fault such as a cut in an optical link. In this case, a network repair and a diagnosis of an event occurrence may become an important issue.

Accordingly, there is a need for an apparatus that may simultaneously perform a data communication and monitor an optical link while easily diagnosing and monitoring an optical link connected to a subscriber through a simple structure.

### SUMMARY

An aspect of the present invention provides an optical transceiver that may simultaneously perform a data communication and monitor an optical link.

A new structure of an optical module for an optical transceiver to be embedded with an optical monitoring function is proposed to achieve an optical monitoring function, to reduce cost used for monitoring a network line, and to enhance a production efficiency by presenting a configuration capable of being mounted to an optical transceiver of a conventional optical line terminal (OLT) and thereby maintaining a compatibility therewith and adding a monitoring function.

According to an aspect of the present invention, there is provided an optical transceiver including: a first optical module configured to output an optical signal of a first wavelength to an optical link for a data communication; a second optical module configured to receive an optical signal of a second wavelength from the optical link; and a third optical module configured to output, to the optical link, an optical signal of a third wavelength for monitoring the optical link, and to receive the optical signal of the third wavelength from the optical link. The first wavelength, the second wavelength, and the third wavelength may differ from one another.

The optical transceiver may further include a wavelength division module configured to change optical links of the optical signal of the first wavelength, the optical signal of the second wavelength, and the optical signal of the third wavelength.

The optical transceiver may be embedded in an OLT or an optical network unit (ONU) of a passive optical network (PON).

The first wavelength may be included in a wavelength band of 1400 nm to 1499 nm, the second wavelength may be included in a wavelength band of 1300 nm to 1399 nm, and the third wavelength may be included in a wavelength band of 1600 nm to 1699 nm.

The optical transceiver may further include a display module configured to display an optical time domain reflectometry (OTDR) diagram in which a power of the optical signal of the third wavelength received by the third optical module is displayed over time, or an analysis module configured to verify an event of an optical link through the OTDR diagram and to notify the verified event of the optical link.

According to another aspect of the present invention, there is provided an optical transceiver including: a first optical module configured to output an optical signal of a first wavelength to an optical link for a data communication; a second optical module configured to receive an optical signal of a second wavelength from the optical link; and a third optical module configured to receive an optical signal of a third wavelength for monitoring the optical link, and to reflect the received optical signal of the third wavelength toward the optical link. The first wavelength, the second wavelength, and the third wavelength may differ from one another.

The optical transceiver may further include a wavelength division module configured to change optical links of the optical signal of the first wavelength, the optical signal of the second wavelength, and the optical signal of the third wavelength.

The optical transceiver may be embedded in an ONU of a PON.

The first wavelength may be included in a wavelength band of 1400 nm to 1499 nm, the second wavelength may be included in a wavelength band of 1300 nm to 1399 nm, and the third wavelength may be included in a wavelength band of 1600 nm to 1699 nm.

The optical transceiver may further include a display module configured to display an OTDR diagram in which a power of the optical signal of the third wavelength received by the third optical module is displayed over time, or an analysis module configured to verify an event of an optical link through the OTDR diagram and to notify the verified event of the optical link.

According to still another aspect of the present invention, there is provided an optical transceiver including: a first optical module configured to output an optical signal of a first wavelength to an optical link for a data communication; a second optical module configured to receive an optical signal of a second wavelength from the optical link; and a third optical module configured to output, to the optical link, an optical signal of a third wavelength for monitoring the optical link, and to receive the optical signal of the third wavelength from the optical link. The first wavelength, the second wavelength, and the third wavelength may differ from one another, the optical transceiver may be embedded in an OLT of a PON, and the OLT may be configured to output the optical signal of the third wavelength to be different for each ONU.

The OLT may be configured to output the optical signal of the third wavelength in a different time for each ONU.

The OLT may be configured to output the optical signal of the third wavelength using a different protocol for each ONU.

The OLT may be configured to output the optical signal of the third wavelength generated using a different coding method for each ONU.

The OLT may be configured to output the optical signal of the third wavelength having different identification information for each ONU.

The optical transceiver may further include a display module configured to display an OTDR diagram in which a power of the optical signal of the third wavelength received by the third optical module is displayed over time, or an analysis module configured to verify an event of an optical link through the OTDR diagram and to notify the verified event of the optical link.

According to still another aspect of the present invention, there is provided an optical network system including: an OLT; and a plurality of ONUs. The OLT may include a first optical transceiver configured to transmit an optical signal for monitoring an optical link, and to receive the optical signal reflected from an ONU, and the ONU may include a second optical transceiver configured to reflect the optical signal received by the OLT, and to transmit the optical signal to the OLT via an optical link.

The OLT may be configured to output the optical signal in a different time for each ONU, to output the optical signal using a different protocol for each ONU, to output the optical signal generated using a different coding method for each ONU, or to output the output signal having different identification information for each ONU.

The first optical transceiver may further include a display module configured to display an OTDR diagram in which a power of the optical signal is displayed over time, or an analysis module configured to verify an event of an optical link through the OTDR diagram and to notify the verified event of the optical link.

According to still another aspect of the present invention, there is provided an optical network system including: an OLT; and a plurality of ONUs. Each of the OLT and the plurality of ONUs may include an optical transceiver configured to perform a data communication and monitor an optical link, and the optical transceiver may be configured to perform the data communication and monitor the optical link using different wavelengths.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a diagram illustrating a structure of a passive optical network (PON) according to an embodiment;
FIG. 2 is a diagram illustrating an optical transceiver according to an embodiment;
FIG. 3 is a diagram illustrating an optical transceiver according to another embodiment;
FIG. 4 is a diagram illustrating an example of transmitting a monitoring light to classify an optical network unit (ONU) over time according to an embodiment;
FIG. 5 is a diagram illustrating an example of transmitting a monitoring light to classify an ONU based on a transmission protocol according to an embodiment;
FIG. 6 is a diagram illustrating an example of transmitting a monitoring light to classify an ONU based on a coding method according to an embodiment; and
FIG. 7 is a diagram illustrating an example of transmitting a monitoring light to classify an ONU based on identification information according to an embodiment.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

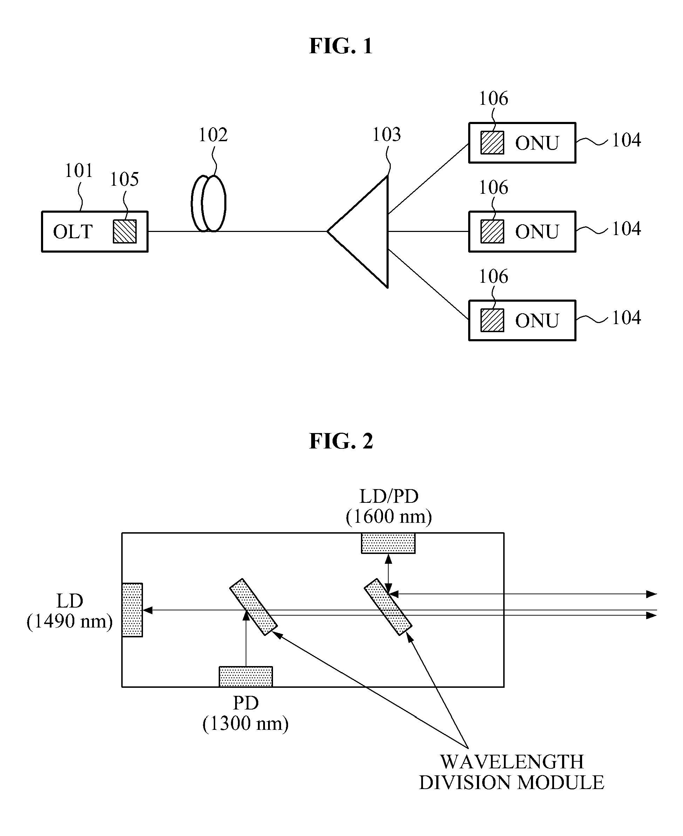

FIG. 1 is a diagram illustrating a structure of a passive optical network (PON) according to an embodiment.

Referring to FIG. 1, the PON may include an optical line terminal (OLT) 101 and a plurality of optical network units (ONUs) 104. Here, a single OLT 101 may connect to the plurality of ONUs 104 through a line divided into 1:N via a passive optical dividing element 103. The PON may be classified into a time division multiplexing (TDM) PON configured to transmit data in a different time for each ONU 104, a wavelength division multiplexing (WDM) PON configured to transmit data using a different wavelength for each ONU 104, an orthogonal frequency division multiplexing (OFDM) PON, and the like.

Here, the OLT 101 may include an optical transceiver 105. The optical transceiver 105 may monitor a downstream link by applying a monitoring light to an optical link 102. Each of the plurality of ONUs 104 may include an optical transceiver 106. The optical transceiver 106 may monitor an upstream link by applying a monitoring light to the optical link 102.

Each of the optical transceiver 105 and the optical transceiver 106 may include an optical module configured to perform an optical time domain reflectometry (OTDR) function for monitoring an optical link. The term "OTDR" may indicate transmitting a pulse-typed monitoring light to an optical link and measuring a signal reflected from the optical link using a time function. The signal measured using the time function may express a physical characteristic of the optical link. The physical characteristic of the optical link may be analyzed using a diagram that expresses a power of the reflected signal over time. A point of the diagram at which a slope is not smooth may indicate that a predetermined event, such as a cut, a change in a refractive index, a bending, and the like, has occurred in the optical link.

FIG. 2 is a diagram illustrating an optical transceiver according to an embodiment.

The optical transceiver of FIG. 2 may be embedded in the OLT 101 or the ONU 104 of FIG. 1. The optical transceiver may include an optical module for a data communication and an optical module for link monitoring. Here, the optical module for the data communication may include a laser diode (LD) configured to transmit an optical signal of a wavelength included in a band of 1400 nm to 1499 nm and a photodiode (PD) configured to receive an optical signal of a wavelength included in a band of 1300 nm to 1399 nm. In the optical module for link monitoring, a laser diode configured to transmit a monitoring light of a wavelength included in a band of 1600 nm to 1699 nm and a photodiode configured to receive a monitoring light of a wavelength included in a band of 1600 nm to 1699 nm are integrated. For example, an optical signal for the data communication and an optical light for link monitoring may be transmitted using different wavelengths.

The optical transceiver may include a wavelength division module configured to change an optical link of the optical signal for the data communication and an optical link of the monitoring light for link monitoring. For example, the optical transceiver may change an optical link from the air without using a wavelength guide module and thus, may more efficiently change the optical link using a simple configuration.

Also, the optical transceiver may include a collimator lens configured to easily change the optical link. The optical transceiver may include a display module configured to display an OTDR diagram in which a power of the monitoring light is displayed over time, or an analysis module configured to verify an event of an optical link through the OTDR diagram and to notify the verified event of the optical link.

Accordingly, the optical transceiver of FIG. 2 may simultaneously perform a data communication and monitor an optical link using a simple structure. A wavelength used in FIG. 2 is only an example and thus, may vary based on a configuration of a PON.

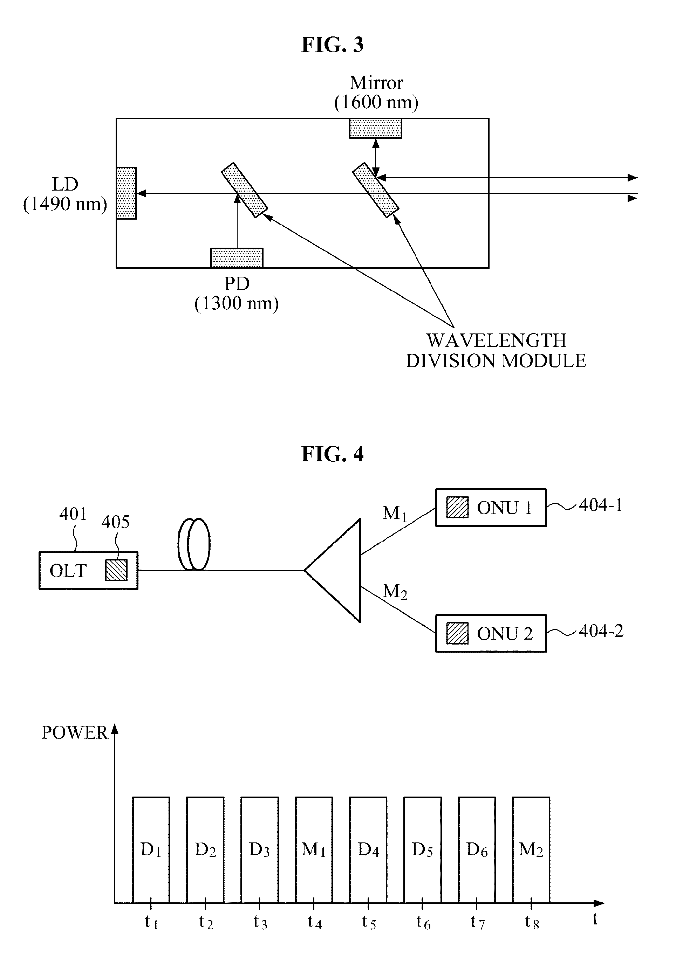

FIG. 3 is a diagram illustrating an optical transceiver according to another embodiment.

The optical transceiver of FIG. 3 may configure an optical module configured to monitor an optical link as a mirror. For example, the optical transceiver may include an optical module for a data communication and an optical module for link monitoring. Here, the optical module for the data communication may include a laser diode (LD) configured to transmit an optical signal of a wavelength included in a band of 1400 nm to 1499 nm and a photodiode (PD) configured to receive an optical signal of a wavelength included in a band of 1300 nm to 1399 nm. The optical module for link monitoring may include a mirror configured to transmit and receive a monitoring light of a wavelength included in a band of 1600 nm to 1699 nm.

For example, an optical signal for the data communication and an optical light for link monitoring may be transmitted using different wavelengths. Here, the mirror may reuse the monitoring light by reflecting the monitoring light reflected from an OLT through an upstream link and thereby transmitting the monitoring light to the OLT through a downstream link.

Also, the optical transceiver may include a collimator lens configured to readily change the optical link. The optical transceiver may include a display module configured to display an OTDR diagram in which a power of the monitoring light is displayed over time, or an analysis module configured to verify an event of an optical link through the OTDR diagram and to notify the verified event of the optical link.

The optical transceiver of FIG. 3 may simultaneously perform a data communication and monitor an optical link and thus, may simultaneously provide a communication service and a monitoring service. Also, the optical transceiver of FIG. 3 may clearly notify a reflection point of monitoring light using a simple structure by reflecting the monitoring light transmitted from an OLT. A wavelength used in FIG. 3 is only an example and thus, may vary based on a configuration of a PON.

FIG. 4 is a diagram illustrating an example of transmitting a monitoring light to classify an ONU over time according to an embodiment.

Referring to FIG. 4, an ONU (1) 404-1 and an ONU (2) 404-2 are connected to an OLT 401. The OLT 401 may include an optical transceiver 405 and the optical transceiver 405 may include an optical module described above with reference to FIGS. 2 and 3.

The optical transceiver 405 of the OLT 401 may transmit a monitoring light in a form of a graph provided in a lower portion of FIG. 4. For example, the optical transceiver 405 may transmit optical signals D₁, D₂, and D₃ for a data communication in times t₁, t₂, and t₃, respectively, and may transmit a monitoring light M₁ for monitoring an optical link connected to the ONU (1) 404-1 in a time t₄. The optical transceiver 405 may transmit optical signals D₄, D₅, and D₆ for a data communication in times t₅, t₆, and t₇, respectively, and may transmit a monitoring light M₂ for monitoring an optical link connected to the ONU (2) 404-2 in a time t₈.

As another example, the monitoring light M₁ and the monitoring light M₂ may be transmitted together with an optical signal for a data communication. The monitoring light M₁ and the monitoring light M₂ may be transmitted in different times. For example, the monitoring light M₁ and the optical signal D₁ may be simultaneously transmitted in the time t₁ and the monitoring light M₂ may be transmitted in the time t₂ or t₃ different from the time t₁ in which the monitoring light M₁ is transmitted.

To monitor an optical link connected to each of a plurality of ONUs in a PON, the OLT 401 may transmit a monitoring light in a different time for each ONU. That is, the OLT 401 may determine whether an event has occurred in an optical link corresponding to an ONU by transmitting a different monitoring light for each ONU over time and by analyzing the monitoring light using an OTDR.

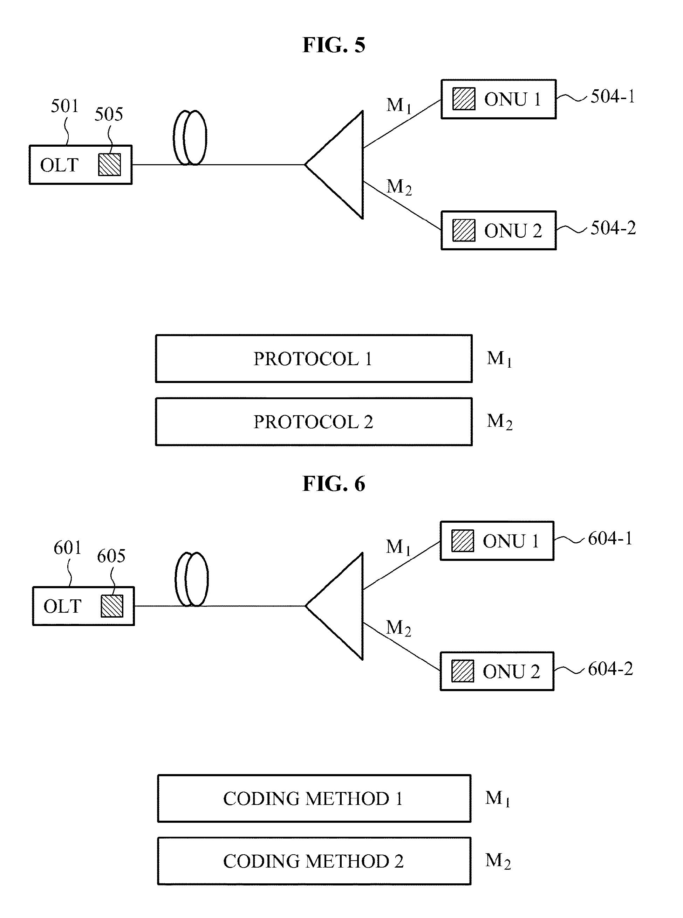

FIG. 5 is a diagram illustrating an example of transmitting a monitoring light to classify an ONU based on a transmission protocol according to an embodiment.

Referring to FIG. 5, an ONU (1) 504-1 and an ONU (2) 504-2 are connected to an OLT 501. The OLT 501 may include an optical transceiver 505 and the optical transceiver 505 may include an optical module described above with reference to FIGS. 2 and 3.

The optical transceiver 505 of the OLT 501 may transmit a monitoring light to each of the ONU (1) 504-1 and the ONU (2) 504-2. Here, the optical transceiver 505 may transmit a monitoring light M₁ using a protocol 1 in order to monitor an optical link connected to the ONU (1) 504-1. The optical transceiver 505 may transmit a monitoring light M₂ using a protocol 2 in order to monitor an optical link connected to the ONU (1) 504-2. A protocol refers to a rule and an agreement about a communication method between an ONU and an OLT and thus, may be classified based on a format configuration of information to be transmitted through a monitoring light and a transmission method. Here, protocols of the monitoring light M₁ and the monitoring light M₂ differ from each other and thus, a number of frames included in each of the monitoring light M₁ and the monitoring light M₂, an interval between frames, a section length, additional information between frames, a header configuration, and the like, may be different.

For example, to monitor an optical link connected to each of a plurality of ONUs in a PON, the OLT 501 may transmit a monitoring light using a different protocol for each ONU. That is, to monitor a monitoring light connected to an ONU, the OLT 501 may determine whether an event has occurred in an optical link corresponding to an ONU by transmitting a monitoring light using a different protocol for each ONU, and by analyzing the monitoring light using an OTDR.

FIG. 6 is a diagram illustrating an example of transmitting a monitoring light to classify an ONU based on a coding method according to an embodiment.

Referring to FIG. 6, an ONU (1) 604-1 and an ONU (2) 604-2 are connected to an OLT 601. The OLT 601 may include an optical transceiver 605 and the optical transceiver 605 may include an optical module described above with reference to FIGS. 2 and 3.

The optical transceiver 605 of the OLT 601 may transmit a monitoring light to each of the ONU (1) 604-1 and the ONU (2) 604-2. Here, the optical transceiver 605 may transmit a monitoring light M₁ using a coding method 1 in order to monitor an optical link connected to the ONU (1) 604-1. The optical transceiver 605 may transmit a monitoring light M₂ using a coding method 2 in order to monitor an optical link connected to the ONU (1) 604-2. A monitoring light may refer to a pulse form, and may be generated using a Golay coding method using a complementary code pair, a coding method using a bi-orthogonal code, a coding method using a bipolar code, or a combination thereof. Also, a monitoring light may be generated to be different based on a time interval between pulses, a pulse width, a pulse height, and a number of pulse repetitions.

For example, to monitor an optical link connected to each of a plurality of ONUs in a PON, the OLT 601 may transmit a monitoring light using a different coding method for each ONU. That is, to monitor a monitoring light connected to an ONU, the OLT 601 may determine whether an event has occurred in an optical link corresponding to an ONU by transmitting a monitoring light using a different coding method for each ONU, and by analyzing the monitoring light using an OTDR.

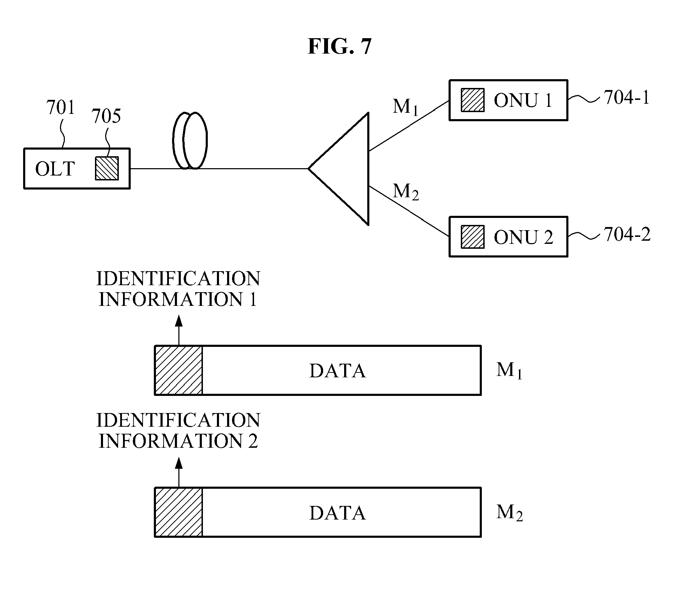

FIG. 7 is a diagram illustrating an example of transmitting a monitoring light to classify an ONU based on identification information according to an embodiment.

Referring to FIG. 7, an ONU (1) 704-1 and an ONU (2) 704-2 are connected to an OLT 701. The OLT 701 may include an optical transceiver 705 and the optical transceiver 705 may include an optical module described above with reference to FIGS. 2 and 3.

The optical transceiver 705 of the OLT 701 may transmit a monitoring light to each of the ONU (1) 704-1 and the ONU (2) 704-2. Here, the optical transceiver 705 may transmit a monitoring light M₁ based on identification information 1 in order to monitor an optical link connected to the ONU (1) 704-1. The optical transceiver 705 may transmit a monitoring light M₂ based on identification information 2 in order to monitor an optical link connected to the ONU (1) 704-2. Identification information may refer to information used to classify an ONU, and may include personal information, for example, a telephone number and an identifier (ID), of a subscriber corresponding to the ONU, location information, for example, a global positioning system (GPS), an address, and a latitude/longitude, of the ONU, a media access control (MAC) address of a model included in the ONU, and the like.

For example, to monitor an optical link connected to each of a plurality of ONUs in a PON, the OLT 701 may transmit a monitoring light based on different identification information for each ONU. That is, to monitor a monitoring light connected to an ONU, the OLT 701 may determine whether an event has occurred in an optical link corresponding to an ONU by transmitting a monitoring light based on different identification information for each ONU, and by analyzing the monitoring light using an OTDR.

According to embodiments of the present invention, it is possible to efficiently perform a data communication and monitor an optical link at the same time through an optical transceiver in a simple structure.

According to embodiments of the present invention, it is possible to reduce cost used for monitoring an optical link by simultaneously performing a data communication and monitoring an optical link through an optical transceiver.

The units described herein may be implemented using hardware components and software components. For example, the hardware components may include microphones, amplifiers, band-pass filters, audio to digital convertors, and processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable recording mediums.

The above-described embodiments of the present invention may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention, or vice versa.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. An optical transceiver comprising:
a first optical module configured to output an optical signal of a first wavelength to an optical link for a data communication;
a second optical module configured to receive an optical signal of a second wavelength from the optical link; and
a third optical module configured to output, to the optical link, an optical signal of a third wavelength for monitoring the optical link, and to receive the optical signal of the third wavelength from the optical link,
wherein the first wavelength, the second wavelength, and the third wavelength differ from one another.

2. The optical transceiver of claim 1, further comprising:
a wavelength division module configured to change optical links of the optical signal of the first wavelength, the optical signal of the second wavelength, and the optical signal of the third wavelength.

3. The optical transceiver of claim 1, wherein the optical transceiver is embedded in an optical line terminal (OLT) or an optical network unit (ONU) of a passive optical network (PON).

4. The optical transceiver of claim 1, wherein the first wavelength is included in a wavelength band of 1400 nm to 1499 nm, the second wavelength is included in a wavelength band of 1300 nm to 1399 nm, and the third wavelength is included in a wavelength band of 1600 nm to 1699 nm.

5. The optical transceiver of claim 1, further comprising:
a display module configured to display an optical time domain reflectometry (OTDR) diagram in which a power of the optical signal of the third wavelength received by the third optical module is displayed over time, or an analysis module configured to verify an event of an optical link through the OTDR diagram and to notify the verified event of the optical link.

6. An optical transceiver comprising:
a first optical module configured to output an optical signal of a first wavelength to an optical link for a data communication;
a second optical module configured to receive an optical signal of a second wavelength from the optical link; and
a third optical module configured to receive an optical signal of a third wavelength for monitoring the optical link, and to reflect the received optical signal of the third wavelength toward the optical link,
wherein the first wavelength, the second wavelength, and the third wavelength differ from one another.

7. The optical transceiver of claim 6, further comprising:
a wavelength division module configured to change optical links of the optical signal of the first wavelength, the optical signal of the second wavelength, and the optical signal of the third wavelength.

8. The optical transceiver of claim 6, wherein the optical transceiver is embedded in an optical network unit (ONU) of a passive optical network (PON).

9. The optical transceiver of claim 6, wherein the first wavelength is included in a wavelength band of 1400 nm to 1499 nm, the second wavelength is included in a wavelength band of 1300 nm to 1399 nm, and the third wavelength is included in a wavelength band of 1600 nm to 1699 nm.

10. The optical transceiver of claim 6, further comprising:
a display module configured to display an optical time domain reflectometry (OTDR) diagram in which a power of the optical signal of the third wavelength received by the third optical module is displayed over time, or an analysis module configured to verify an event of an optical link through the OTDR diagram and to notify the verified event of the optical link.

11. An optical transceiver comprising:
a first optical module configured to output an optical signal of a first wavelength to an optical link for a data communication;
a second optical module configured to receive an optical signal of a second wavelength from the optical link; and
a third optical module configured to output, to the optical link, an optical signal of a third wavelength for monitoring the optical link, and to receive the optical signal of the third wavelength from the optical link,
wherein the first wavelength, the second wavelength, and the third wavelength differ from one another,
the optical transceiver is embedded in an optical line terminal (OLT) of a passive optical network (PON), and
the OLT is configured to output the optical signal of the third wavelength to be different for each optical network unit (ONU).

12. The optical transceiver of claim 11, wherein the OLT is configured to output the optical signal of the third wavelength in a different time for each ONU.

13. The optical transceiver of claim 11, wherein the OLT is configured to output the optical signal of the third wavelength using a different protocol for each ONU.

14. The optical transceiver of claim 11, wherein the OLT is configured to output the optical signal of the third wavelength generated using a different coding method for each ONU.

15. The optical transceiver of claim 11, wherein the OLT is configured to output the optical signal of the third wavelength having different identification information for each ONU.
